# EUROPEAN PATENT APPLICATION

(11) **EP 4 825 881 A1**
(43) Date of publication of application: **21.10.2026**
(21) Application number: 25171485.3
(22) Date of filing: 18.04.2025
(51) Int. Cl.: C08C 19/34, C08F 8/14

(54) **TERMOPLASTIC COMPOSITION**

(71) Applicant: SABIC Global Technologies B.V., 4612 PX Bergen op Zoom (NL)
(72) Inventor: DUCHATEAU, Robbert, 6160 GA Geleen (NL); JASINSKA-WALC, Lidia, 6160 GA Geleen (NL); NOWICKA, Weronika, 80-222 Gdansk (PL); SZOT, Wojciech, 80-222 Gdansk (PL)
(74) Representative: Sabic Intellectual Property Group

(57) **Abstract**

Disclosed herein is a polymer composition comprising i) functionalised polyolefin consisting of α-ω functionalised polyolefin, or a combination of α-ω functionalised polyolefin and α-functionalised polyolefin, ii) cross-linking compound, wherein either the functional groups of the functionalised polyolefin comprise Brønsted acidic groups and the cross-linking compound comprises one or more Brønsted basic groups, or the functional groups of the functionalised polyolefin comprise Brønsted basic groups and the cross-linking compound comprises one or more Brønsted acidic groups, and wherein the functionalised polyolefin has a number average molecular weight of from 1,000 to 10,000 g/mol.

## Description

The present invention relates to a polymer composition comprising functionalised polyolefin having functional groups and a cross-linking compound capable of interacting with said functional groups.

Functionalised polyolefins are known per se and typically consist of a polyolefin backbone comprising functional groups attached thereto. These functional groups can be distributed randomly along the polyolefin chain or can be positioned at specific positions regularly. When combined with a cross-linking compound the functional groups of a first polymer chain can be linked to the functional groups of another chain, or to functional groups at another position of the same chain, thus creating a cross-link. Depending on the type of cross-linking compound the so formed cross-link may be reversible or irreversible. From the point of view of applicability there is a specific interest in reversible cross-links. For example, there is an interest in materials that can be processed as thermoplastics at higher temperatures, which, however, show properties resembling those of thermoset materials at lower temperatures. A known class of materials showing this behaviour are thermo-reversible ionomers.

WO 2019/122456 discloses a semi-crystalline functionalized olefin copolymer composition comprising i) from 90 - 99.99 wt.% of a semi-crystalline functionalized olefin copolymer of at least one olefin monomer selected from the group consisting of propylene, 1-butene, 3-methyl-1-butene, 1-pentene, 4-methyl-1-pentene, 1-hexene, vinyl cyclohexane and 1-octene and at least one functionalized olefin monomer selected from the group consisting of allyl alcohol, 3-buten-1-ol, 3-buten-2-ol, 3-buten-1,2-diol, 5-hexene-1-ol, 5-hexene-1,2-diol, 7-octen-1-ol, 7-octen-1,2-diol, 9-decen-1-ol, 10-undecene-1-ol, 5-norbornene-2-methanol, 3-butenoic acid, 4-pentenoic acid or 10-undecenoic acid, preferably 3-buten-1-ol, 3-buten-2-ol, 10-undecen-1-ol, 4-pentenoic acid and 10-undecenoic acid, and ii) from 0.01 to 10 wt.% of at least one cross-linking enhancing agent selected from the group consisting of polyols, polyamines, polyacids, polyethers, polyesters, polycarbonates, polyamides, polyurethanes, polyureas, polysaccharides, polypeptides, wherein said cross-linking enhancing agent has at least two functionalities, wherein the wt.% is based on the combined weight of the semi-crystalline functionalized olefin copolymer and the cross-linking enhancing agent.

WO 2019/122459 discloses a functionalized ethylene and propylene copolymer composition comprising i) from 90 - 99.99 wt.% of a functionalized ethylene and propylene copolymer of ethylene, propylene and at least one functionalized olefin monomer selected from the group consisting of allyl alcohol, 3-buten-1-ol, 3-buten-2-ol, 3-buten-1,2-diol, 5-hexene-1-ol, 5-hexene-1,2-diol, 7-octen-1-ol, 7-octen-1,2-diol, 9-secen-1-ol, 1 0-undecene-1-ol, 5-norbornene-2-methanol, 3-butenoic acid, 4-pentenoic acid or 10-undecenoic acid, preferably 3-buten-1-ol, 3-buten-2-ol, 1 0-undecen-1-ol, 4-pentenoic acid and 10-undecenoic acid, ii) from 0.01 to 10 wt.%, preferably from 0.03 - 7 wt.%, of at least one cross-linking enhancing agent selected from the group consisting of polyols, polyamines, polyacids, polyethers, polyesters, polycarbonates, polyamides, polyurethanes, polyureas, polysaccharides, polypeptides, wherein said cross-linking enhancing agent has at least two functionalities, wherein the wt.% is based on the combined weight of the functionalized ethylene and propylene copolymer and the cross-linking enhancing agent.

WO 2019/122458 discloses a process for the manufacture of a semi-crystalline polyolefinic ionomer comprising the steps of:
a1) copolymerizing at least one olefin monomer and at least one masked functionalized olefin monomer in the presence of a catalyst system, wherein the olefin monomer is represented by CH₂=CHR¹, wherein R¹ is an alkyl group having 1 to 6 carbon atoms,
wherein the masked functionalized olefin monomer is a reaction product of a functionalized olefin monomer represented by the structure according to Formula (I) and a masking agent: 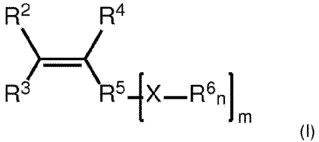
wherein R², R³ and R⁴ are each independently selected from the group consisting of H and hydrocarbyl with 1 to 16 carbon atoms, wherein R⁵-[X-(R⁶)ₙ]ₘ is a polar functional group containing one or multiple heteroatom-containing functionalities X-(R⁶)n wherein
X is selected from -O-, -S- or -CO₂- and R⁶ is H, and n is 1, or X is N and R⁶ is each independently selected from the group consisting of H and a hydrocarbyl group with 1 to 16 carbon atoms, and n is 2, wherein R⁵ is either -C(R^{7a})(R^{7b})- or a plurality of - C(R^{7a})(R^{7b})- groups, wherein R^{7a}, and R^{7b} are each independently selected from the group consisting of H or hydrocarbyl with 1 to 16 carbon atoms and R⁵ comprises 1 to 10 carbon atoms, wherein R³ and R⁵ may together form a ring structure that is functionalized with one or multiple X-(R⁶)n, where X is attached to either the main chain or side chain of R⁵, where m is an entire number between 1 and 10, and either
b1) treating the product of step a1) with a protic solution containing metal salts, ammonium salts or amines to perform an exchange reaction, or
a2) contacting the product of a1) with a Bransted acid solution capable to abstract the residue derived from the masking agent from the functionalized olefin copolymer of step a1) to obtain the semi-crystalline functionalized olefin copolymer comprising the first olefin monomer and the functionalized olefin monomer, and either
b2) treating the product of step a2) with a monovalent metal salt, a monocationic ammonium salt or a monofunctional amine, or
b3) treating the product of step a2) with a multi-valent metal salt, a polycationic ammonium salt or a polyfunctional amine.

WO 2019/122457 discloses a process for the manufacture of an ethylene and propylene ionomer comprising the steps of:
a1) copolymerizing ethylene, propylene and at least one masked functionalized olefin monomer in the presence of a catalyst system, wherein the masked functionalized olefin monomer is a reaction product of a functionalized olefin monomer represented by the structure according to Formula (I) and a masking agent: 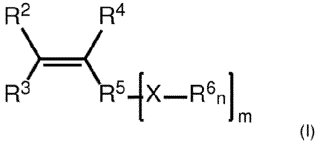
wherein R², R³ and R⁴ are each independently selected from the group consisting of H and hydrocarbyl with 1 to 16 carbon atoms, wherein R⁵-[X-(R⁶)ₙ]ₘ is a polar functional group containing one or multiple heteroatom-containing functionalities X-(R⁶)n wherein X is selected from -O-, -S- or -CO₂- and R⁶ is H, and n is 1, or X is N and R⁶ is each independently selected from the group consisting of H and a hydrocarbyl group with 1 to 16 carbon atoms, and n is 2, wherein R⁵ is either -C(R^{7a})(R^{7b})- or a plurality of - C(R^{7a})(R^{7b})- groups, wherein R^{7a}, and R^{7b} are each independently selected from the group consisting of H or hydrocarbyl with 1 to 16 carbon atoms and R⁵ comprises 1 to 10 carbon atoms, wherein R³ and R⁵ may together form a ring structure that is functionalized with one or multiple X-(R⁶)n, where X is attached to either the main chain or side chain of R⁵, where m is an entire number between 1 and 10, and either
b1) treating the product of step a1) with a protic solution containing metal salts, ammonium salts or amines to perform an exchange reaction, or
a2) contacting the product of a 1) with a Brønsted acid solution capable to abstract the residue derived from the masking agent from the functionalized ethylene and propylene copolymer of step a 1) to obtain the functionalized ethylene and propylene copolymer, and either
b2) treating the product of step a2) with a monovalent metal salt, a monocationic ammonium salt or a monofunctional amine,
   or
b3) treating the product of step a2) with a multi-valent metal salt, a polycationic ammonium salt or a polyfunctional amine.

WO 2019/122453 and WO 2019/122455 both disclose a process for the manufacture of an amorphous polyolefinic ionomer comprising the steps of:
a1) copolymerizing at least one olefin monomer and at least one masked functionalized olefin monomer in the presence of a catalyst system, wherein the olefin monomer is represented by CH₂=CHR¹, wherein R¹ is an alkyl group having 1 to 6 carbon atoms,
wherein the masked functionalized olefin monomer is a reaction product of a functionalized olefin monomer represented by the structure according to Formula (I) and a masking agent: 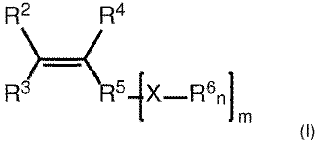
wherein R², R³ and R⁴ are each independently selected from the group consisting of H and hydrocarbyl with 1 to 16 carbon atoms,
wherein R⁵-[X-(R⁶)ₙ]ₘ is a polar functional group containing one or multiple heteroatom-containing functionalities X-(R⁶)n wherein
X is selected from -O-, -S- or -CO₂- and R⁶ is H, and n is 1, or X is N and R⁶ is each independently selected from the group consisting of H and a hydrocarbyl group with 1 to 16 carbon atoms, and n is 2, wherein R⁵ is either -C(R^{7a})(R^{7b})- or a plurality of - C(R^{7a})(R^{7b})- groups, wherein R^{7a}, and R^{7b} are each independently selected from the group consisting of H or hydrocarbyl with 1 to 16 carbon atoms and R⁵ comprises 1 to 10 carbon atoms, wherein R³ and R⁵ may together form a ring structure that is functionalized with one or multiple X-(R⁶)n, where X is attached to either the main chain or side chain of R⁵, where m is an entire number between 1 and 10, and either
b1) treating the product of step a1) with a protic solution containing metal salts, ammonium salts or amines to perform an exchange reaction or
a2) contacting the product of a1) with a Bransted acid solution capable to abstract the residue derived from the masking agent from the functionalized olefin copolymer to obtain the amorphous functionalized olefin copolymer comprising the first olefin monomer and the functionalized olefin monomer, and either
b2) treating the product of step a2) with a monovalent metal salt, a monocationic ammonium salt or a monofunctional amine, or
b3) treating the product of step a2) with a multi-valent metal salt, a polycationic ammonium salt or a polyfunctional amine.

As disclosed in the foregoing references, it was considered that the functionalities of certain functionalised polyolefins tend to cluster, which in itself means that a certain degree of cross-linking is inherently present in at least some types of functionalised polyolefins and that these cross-links can be enhanced by addition of certain materials that interact with the functionalities of the functionalised polyolefins.

Polyolefins represent one of the most widely used polymers at present and with that comes that a lot of polyolefin materials end up as waste material. Recycling techniques exist and include mechanical recycling and chemical recycling. For example, it is known to convert polyolefin waste into pyrolysis oil, which can be introduced into existing naphtha crackers to form olefins, which in turn can be converted into polyolefins again. A disadvantage, at present, of this form of chemical recycling is that it is energy intensive and non-selective yielding a wide range of ill-defined products. Mechanical recycling is well-known but a disadvantage of this method of recycling is that the mechanical properties of the recycled materials are typically lower compared to the mechanical properties of virgin materials.

Accordingly, there is a need to find applications involving the use of recycled polyolefin materials which can generate a stream of materials that can either be used as such or as an additive in polyolefin applications.

To that extent the present inventors have found that performing the pyrolysis process at a temperature of about 350 - 450 °C, results in formation of oligomers that may comprise a carbon-carbon double bond at the α or α and ω position. For the avoidance of doubt and for the purpose of the present invention the terms α and/or ω positions refer to the chain end groups of the polymer chain. Typically, a polymer has two chain ends and if both chain ends contain a double bond or a functionality, then these double bonds or functionalities are said to be present at the α and ω positions. If only one end has a double bond or is functionalised then reference is only made to the α position.

Such oligomers having carbon-carbon double bond at the α and ω position can also be produced by a catalytic process starting from olefins rather than polyolefins as feedstock. An example can be found in Angew. Chem. Int. Ed. 2015, 54, 4631-4635.

The oligomers having double bonds at the α or α and ω positions can easily be converted into functionalised oligomers. Typically these will be hetero-atom containing polar functionalised oligomers. Following the disclosure in the references cited above, the present inventors consider that these functionalities will also cluster together, however, forming relatively weak cross-linking capabilities, leading to relatively poor mechanical properties. Surprisingly, however, the present inventors have observed that more beneficial mechanical properties can be obtained if such oligomers contain either Brønsted acidic or Brønsted basic functional groups and such oligomers are combined with a cross-linking compound that contains Bransted basic or Brønsted acidic groups, respectively, that interact with the Brønsted acidic or Brønsted basic groups of the functionalised oligomers. More in particular the present inventors have found that such compositions, i.e. compositions comprising the functionalised polyolefin oligomer and the cross-linking compound behave as a polymeric and/or cross-linked materials at room temperature having desired mechanical properties, as shown by the shear thinning behaviour of the material at service temperature, whereas they behave as low viscous oligomeric products under processing conditions at high temperature, as demonstrated by rheology and the high temperature size exclusion chromatography (HT-SEC) measurements.

Accordingly, the present invention is directed at a polymer composition comprising
- functionalised polyolefin consisting of α-ω functionalised polyolefin, or a combination of α-ω functionalised polyolefin and α-functionalised polyolefin, said α-ω functionalised polyolefin having a functional group at both the α and ω positions and said α functionalised polyolefin having a functional group at the α position,
- cross-linking compound capable of interacting with said functional groups, wherein either
- the functional groups of the functionalised polyolefin comprise Bransted acidic groups and the cross-linking compound comprises one or more Bransted basic groups, or
- the functional groups of the functionalised polyolefin comprise Brønsted basic groups and the cross-linking compound comprises one or more Bransted acidic groups,
- the functionalised polyolefin has a number average molecular weight, determined in accordance with the method disclosed herein, of from 1,000 to 10,000 g/mol.

### Functionalised polyolefin

The polyolefin of the functionalised polyolefin can be of any type and/or chemical composition. Accordingly, the polyolefin can be a polyethylene, a polypropylene or an ethylene propylene copolymer. As known in the art several types of polyethylene exist, some of which contain a certain amount of either 1-butene, 1-hexene, 1-octene or any other olefinic comonomer such as 4-methyl-1-pentene or norbornene. Thus, the polyethylene can be a low-density polyethylene, a linear low-density polyethylene a medium-density polyethylene or a high-density polyethylene. Some polyethylenes may be branched to a certain extent.

The number average molecular weight (*M*ₙ) of the functionalised polyolefin in accordance with the invention is from 1000 to 10000 g/mol, preferably from 2000 to 7000 g/mol, more preferably from 2500 to 5000 g/mol. Within these molecular weights the functionalised polyolefin can be said to be an oligomer.

As explained already, the terms α and/or ω positions refer to the end groups of the polymer chain. Typically, a polymer has two chain ends and if both chain ends contain a functionality, then these functionalities are said to be present at the α and ω positions. If only one end of the polymer chain is functionalised, then reference is only made to the α position. It is preferred that functionalised polyolefin does not comprise functional groups other than at the α and ω positions. Notwithstanding the foregoing it is to be understood that the total average functionality, defined as the amount of mol of functional groups per mol of functionalised polyolefin is low, such as at most 5, preferably at most 3, more preferably at most 2.

The average α-ω functionality, defined as the amount of mol of functional groups at the α and ω positions per mol of functionalised polyolefin is preferably from 1.1 to 2, preferably from 1.3 to 2, more preferably from 1.4 to 2 or 1.5 to 2.

For the avoidance of doubt, it is noted that the functional groups at the α and ω positions may comprise more than one actual functionality. So, for example, at an α position there may be linked to the polyolefin chain a group that comprises more than one Brønsted acidic or Brønsted basic functionality. For the purpose of determining the α-ω functionality however, such end groups will count as one. The amount of such Bransted acidic or Brønsted basic functionalities at the chain end(s) is preferably from 1 to 10, more preferably 1 to 4, more preferably 1 or 2. From a manufacturing point of view it may be preferred that there is only one such end-chain Brønsted acidic or Brønsted basic functionality.

While the present invention is not strictly limited in this respect per se, the functional groups at the α and ω positions preferably consist of Brønsted acidic or Brønsted basic functional groups. Optionally a minor amount of at most 10 mol%, preferably at most 5 mol% based on the total molar amount of functional groups comprises functional groups other than Brønsted acidic or Brønsted basic functional groups.

The Brønsted acidic groups of the functionalised polyolefin are preferably selected from the group consisting of -OH, -SH, -COOH, -SO₃H, -PO₃H₂, -OPO₃H₂ preferably -OH or -CO₂H. Optionally, the Brønsted acidic groups are a combination of two or more of the foregoing, which however is less preferred.

The Brønsted basic groups of the functionalised polyolefin are preferably selected from the group consisting of -NH₂, -NHR, -NR₂, where R is a hydrocarbyl group with 1 to 16 carbon atoms. Optionally, the Brønsted basic groups are a combination of two or more of the foregoing, which however is less preferred.

### Cross-linking compound

The cross-linking compound in the context of the invention is defined as a compound capable of interacting with the functional groups of the functionalised polyolefin. In principle at the least the Brønsted acidic groups defined and disclosed herein will interact with the Brønsted basic groups defined and disclosed herein, whereby the Brønsted acidic group donates a proton, either reversibly or irreversibly, to the Brønsted basic group. The present inventors consider that the cross-linking compound will prefer to be in the polar domains or clusters formed by the functional groups of the functionalised polyolefin, rather than in the apolar polyolefin matrix. And, because of the interaction of the cross-linking compound with the functional groups of the functionalised polyolefin the composition as a whole will show improved bonding between the chains of the functionalised polyolefin as well as with the cross-linking compound resulting in a stronger material. Such improved bonding may resemble a cross-linked material, depending on the type of Brønsted acid and Brønsted basic functionalities used and the molar ratio of the functional groups in the functionalised polyolefin and the Brønsted acidic or Brønsted basic groups in the cross-linking compound.

Preferably, this molar ratio of the functional groups in the functionalised polyolefin and the Brønsted acidic or Brønsted basic groups in the cross-linking compound, as the case may be, is from 0.1 to 10 for cross-linking compounds having up to four functionalities. More preferably the molar ratio is from 0.3 to 6, even more preferably from 0.5 to 2. This molar ratio reflects the actual amount of functionalities in the functionalised polyolefin and the cross-linking compound. Thus, and by way of example, one mole of an α-ω functionalised polyolefin having two amine groups at each end of the chain which is combined with one mole of succinic acid means that this molar ratio is 4:2, i.e.. 2.

For polymeric cross-linking compounds having a high number, i.e. at least 5 preferably at least 10, of Brønsted acidic or Brønsted basic groups, such as polyacrylic acid the molar ratio of the functional groups in the functionalised polyolefin and the Brønsted acidic or Brønsted basic groups in the cross-linking compound, as the case may be, is preferably at most 1, preferably at most 0.5. A lower limit for the ratio may be 0.0001, 0.001, or 0.01 but largely depends on the actual number of functionalities in such a polyfunctional cross-linking compound.

It is preferred that the cross-linking compound having Brønsted basic groups is selected from the group consisting of amine, diamine, triamine, polyamine, metal oxides (MOₓ), metal hydroxides (MOHₓ), metal alkoxides (MOR¹ₓ), metal carbonates (M(CO₃)ₓ), metal amides (M(NR²₂)ₓ), metal hydrides or metal alkyls (MR³ₓ) wherein
x = 1, 2 or 3,
M = Li, Na, K, Mg, Ca, Zn, Al,
R¹ = C1-C10 alkyl,
R², R³ = H, C1-C10 alkyl.

Preferably the Brønsted basic group is selected from diamine, triamine, polyamine, metal hydroxide, metal alkoxide (MOR¹ₓ) or metal carbonate (M(CO₃)ₓ), where M preferably is Na, K, Ca, or Al. Examples of such basic cross-linking compounds are N,N,N',N'-tetramethylethylenediamine, N,N,N',N',N"-pentamethyldiethylenetriamine, polyethyleneimine, NaOH, KOH, NaOC₂H₅, CaCO₃.

Combinations of any of the foregoing Brønsted basic groups may also be used in the cross-linking compound.

Preferably the cross-linking compound having Brønsted acidic groups is selected from the group consisting of mono-, di-, tri and polycarboxylic acids, preferably di-, tri or polycarboxylic acid. Examples of such acidic cross-linking compounds are succinic acid, citric acid or polyacrylic acid.

### Composition and applications

The composition disclosed herein can be used "as such" and will provide the benefit, at typical use temperature, of otherwise similar high molecular weight or even crosslinked polyolefins.

The composition disclosed herein may comprise other non-functionalised polyolefins or functionalised polyolefins other than as defined herein, provided that the functionalities of such further functionalised polyolefin are compatible with the functionalities of the functionalised polyolefin in accordance with the inventive composition. Thus, the polymer composition may comprise functionalised polyolefins having functional groups other than, or in addition to, functional groups at the α, or α and ω positions.

In that respect the term compatible means that the functionalities of the further functionalised polyolefin are either Brønsted acidic or Brønsted basic groups falling within the scope as disclosed herein and as the case may be, or, are functionalities (i.e. functional groups) that do not interact with either Brønsted acidic or Brønsted basic functionalities.

The amount of such further functional polyolefin is preferably at most 25 wt.%, more preferably at most 10 wt.%, even more preferably at most 5 wt.%, based on the combined weight of functionalised polyolefin and further functionalised polyolefin. Preferably the composition does not comprise further functionalised polyolefin other than the functionalised polyolefin as disclosed herein.

As mentioned above, the polymer composition of the invention disclosed herein may further comprise non functionalised polyolefin. The amount thereof is not particularly limited and depends inter alia on the intended application.

For example, in the polymer composition of the invention the combined amount of functionalised polyolefin and cross-linking compound may be at least 50 wt.%, preferably at least 75 wt.%, more preferably at least 90 wt.%, more preferably at least 95 wt.% based on the weight of the polymer composition. Such compositions are essentially intended to benefit fully from the advantages as disclosed herein, such as improved properties at relatively low temperatures and improved processability at elevated temperatures. In addition, if the functionalised polyolefin is manufactured from recycled (non functionalised) polyolefins such compositions provide a good alternative use of waste materials and do not require to be subjected to full pyrolysis.

On the other hand, in the polymer composition the combined amount of functionalised polyolefin and cross-linking compound may be at most 50 wt.%, preferably at most 25 wt.%, more preferably at most 10 wt.%, more preferably at most 5 wt.%, or at most 2 wt.%, and at least 1 wt.%, based on the weight of the polymer composition. For example, the combined amount of functionalised polyolefin and cross-linking compound may be from 1 to 50 wt.%, 1 to 25 wt.%, 2 to 10 wt.% based on the weight of the composition. The use of such lower amounts is of particular interest if the functionalised polyolefin and cross-linking compound are combined with one or more non-functionalised polyolefins. The presence of the functionalised polyolefin and the cross-linking compound may still enhance the properties of such non-functionalised polyolefin. In that respect it is preferred that the non-functionalised polyolefin comprises recycled polyolefin.

In accordance with the foregoing, the composition in an aspect comprises
(A) functionalised polyolefin consisting of α-ω functionalised polyolefin, or a combination of α-ω functionalised polyolefin and α-functionalised polyolefin, said α-ω functionalised polyolefin having a functional group at both the α and ω positions and said α functionalised polyolefin having a functional group at the α position,
(B) cross-linking compound capable of interacting with said functional groups,
   wherein either
   - the functional groups of the functionalised polyolefin comprise Bransted acidic groups and the cross-linking compound comprises one or more Bransted basic groups, or
   - the functional groups of the functionalised polyolefin comprise Brønsted basic groups and the cross-linking compound comprises one or more Bransted acidic groups,
   - the functionalised polyolefin has a number average molecular weight of from 1,000 to 10,000 g/mol determined in accordance with the method disclosed herein, and
(C) from 0 to 5 wt.%, preferably from 0 to 3 wt.% or 0 to 1 wt.%, based on the weight of the composition, of further components, and wherein the sum of the amounts of (A), (B) and (C) is 100 wt.% based on the weight of the composition.

In another aspect the composition comprises
(A) functionalised polyolefin consisting of α-ω functionalised polyolefin, or a combination of α-ω functionalised polyolefin and α-functionalised polyolefin, said α-ω functionalised polyolefin having a functional group at both the α and ω positions and said α functionalised polyolefin having a functional group at the α position,
(B) cross-linking compound capable of interacting with said functional groups,
   wherein either
   - the functional groups of the functionalised polyolefin comprise Bransted acidic groups and the cross-linking compound comprises one or more Bransted basic groups, or
   - the functional groups of the functionalised polyolefin comprise Brønsted basic groups and the cross-linking compound comprises one or more Bransted acidic groups,
   - the functionalised polyolefin has a number average molecular weight, determined in accordance with the method disclosed herein of from 1,000 to 10,000 g/mol,
(C) from 0 to 5 wt.%, preferably from 0 to 3 wt.% or 0 to 1 wt.%, based on the weight of the composition, of further components, and
(D) non-functionalised polyolefin,
   and wherein, based on the weight of the polymer composition
   - the sum of the amounts of (A) to (D) is 100 wt.% based on the weight of the composition,
   - the combined amount of (A) and (B) is at least 50 wt.%, preferably at least 75 wt.%, more preferably at least 90 wt.%, more preferably at least 95 wt.%.

In a further aspect the composition comprises
(A) functionalised polyolefin consisting of α-ω functionalised polyolefin, or a combination of α-ω functionalised polyolefin and α-functionalised polyolefin, said α-ω functionalised polyolefin having a functional group at both the α and ω positions and said α functionalised polyolefin having a functional group at the α position,
(B) cross-linking compound capable of interacting with said functional groups,
   wherein either
   - the functional groups of the functionalised polyolefin comprise Bransted acidic groups and the cross-linking compound comprises one or more Bransted basic groups, or
   - the functional groups of the functionalised polyolefin comprise Brønsted basic groups and the cross-linking compound comprises one or more Bransted acidic groups,
   - the functionalised polyolefin has a number average molecular weight, determined in accordance with the method disclosed herein, of from 1,000 to 10,000 g/mol,
(C) from 0 to 5 wt.%, preferably from 0 to 3 wt.% or 0 to 1 wt.%, based on the weight of the composition, of further components, and
(D) non-functionalised polyolefin, and
   wherein, based on the weight of the polymer composition,
   - the sum of the amounts of (A) to (D) is 100 wt.% based on the weight of the composition,
   - the combined amount of (A) and (B) is at most 50 wt.%, preferably at most 25 wt.%, more preferably at most 10 wt.%, more preferably at most 5 wt.%, or at most 2 wt.%, and at least 1 wt.%.

Preferred features of the components making up the polymer composition as disclosed herein also apply to the polymer composition of the foregoing aspects.

The further components preferably include additives typically used in polyolefin compositions including in particular, but not strictly limited to, anti-oxidants, heat stabilisers, UV stabilisers, flame retardants, fillers and colorants.

The present invention further relates to an article comprising or consisting the polymer composition as disclosed herein. Applications for the polymer composition may vary widely with typical applications including in particular packaging applications, (ion exchange) membranes, shape-memory materials, self-healing materials, adhesives or adhesion promotors, tie-layers, compatibilizers, cosmetics components, additives in cement and/or concrete formulations.

The present invention is further elaborated by the following non-limiting examples.

### Measurement methods

The number average molecular weight (Mn), weight average molecular weight (Mw), and polydispersity index (PDI) of the functionalised polyolefin are determined in accordance with ASTM D6474-12. SEC measurements were performed at 150 °C on a Polymer Char GPC-IR^{®} built around an Agilent GC oven model 7890, equipped with an autosampler and the Integrated Detector IR4. 1,2-Dichlorobenzene (o-DCB) was used as an eluent at a flow rate of 1 mL/min. The data were processed using Calculations Software GPC One^{®}. The molecular weights (Mn, Mw) were calculated with respect to polystyrene standards. The polydispersity Index (PDI) is calculated by dividing the weight average molecular weight (Mw) by the number average molecular weight (Mn).

### Preparation of citric acid modified hydrogenated α, ω-dihydroxy polybutadiene:

Reactions were performed using standard Schlenk techniques. α, ω-Dihydroxy polybutadiene (P-2000) (Mn = 2000 g/mol; 3.0 g, 1.5 mmol) and citric acid (CA) (0.6 g, 3.3 mmol) were transferred into the flask and secured with a stopper and septum. The reaction mixture was purged with nitrogen three times and titanium (IV) isopropoxide (0.5 mg, 1.8 mmol, dissolved in toluene, 1 mL) was added with syringe via septum. Then the flask was placed in an oil-bath preheated to 150 °C. After 3 h, 50 mL of toluene were added via septum and the reaction mixture was stirred at 100 °C for an additional h. Next, the product mixture was washed with 5 × 20 mL aqueous solution of 5% NaCl. The resulting organic fraction was vacuum dried to give P-3000-CA as a white gel-like solid.

### Preparation of succinic acid modified hydrogenated α, ω-dihydroxy polybutadiene:

α, ω-Dihydroxy polybutadiene (P-2000) (Mn = 2000 g/mol; 2.9 g, 1.5 mmol) and succinic acid anhydride (0.3 g, 3.2 mmol) were transferred into the flask and secured with a stopper and septum. The reaction mixture was purged with nitrogen three times and titanium (IV) isopropoxide (0.5 mg, 1.8 mmol, dissolved in toluene, 1 mL) was added with syringe via septum. Then the flask was placed in an oil-bath preheated to 150 °C. After 3 h, 50 mL of toluene were added via septum and the reaction mixture was stirred at 100 °C for an additional h. Next, the product mixture was washed with 5 × 20 mL aqueous solution of 5% NaCl. The resulting organic fraction was vacuum dried to give P-3000-SA as a white gel-like solid.

### Preparation of citric acid modified atactic α, ω-dihydroxy polypropylene:

α, ω-Dihydroxy polypropylene was prepared following a reported procedure (Macromolecules 2005, 38, 10373-10378). α, ω-Dihydroxy polypropylene (Mn = 2900 g/mol; 2.3 g, 0.8 mmol) and citric acid (0.36 g, 1.9 mmol) were transferred into the flask and secured with a stopper and septum. The reaction mixture was purged with nitrogen three times and titanium (IV) isopropoxide (0.5 mg, 1.8 mmol, dissolved in toluene, 1 mL) was added with syringe via septum. Then the flask was placed in an oil-bath preheated to 150 °C. After 3 h, 50 mL of toluene were added via septum and the reaction mixture was stirred at 100 °C for an additional h. Next, the product mixture was washed with 5 × 20 mL aqueous solution of 5% NaCl. The resulting organic fraction was vacuum dried to give aPP-CA as a rubbery solid material.

### Treatment of P-3000-CA with TMEDA:

In a Schlenk flask, P-2000-CA (2.0 g, 0.85 mmol) was dissolved in hot toluene (50 mL) and N,N,N',N'-tetramethylethyleneadiamine (TMEDA; 0.56 mL, 3.7 mmol) was added. The resulting clear solution was vacuum dried to give P-3000-CA/TMEDA as a white rubbery solid material.

Similarly, P-3000-SA and aPP-CA were treated with TMEDA (1.1 equiv. with respect to the number of acid groups).

## Claims

1. Polymer composition comprising
- functionalised polyolefin consisting of α-ω functionalised polyolefin, or a combination of α-ω functionalised polyolefin and α-functionalised polyolefin, said α-ω functionalised polyolefin having a functional group at both the α and ω positions and said α functionalised polyolefin having a functional group at the α position,
- cross-linking compound,
wherein either
- the functional groups of the functionalised polyolefin comprise Bransted acidic groups and the cross-linking compound comprises one or more Brønsted basic groups, or
- the functional groups of the functionalised polyolefin comprise Bransted basic groups and the cross-linking compound comprises one or more Brønsted acidic groups,
- the functionalised polyolefin has a number average molecular weight of from 1,000 to 10,000 g/mol determined in accordance with the method set out in the description.

2. The polymer composition of claim 1 wherein the functionalised polyolefin has an average functionality of from 1.1 to 2, preferably from 1.5 to 2 mol of functional groups per mol of functionalised polyolefin.

3. The polymer composition of claim 1 or 2 wherein the functionalised polyolefin does not comprise functional groups other than at the α and ω positions.

4. The polymer composition of any one or more of claims 1 - 3 wherein a molar ratio of the functional groups in the functionalised polyolefin and the Brønsted acidic or Brønsted basic groups in the cross-linking compound, as the case may be, is from 0.1 to 10.

5. The polymer composition of any one or more of claims 1 - 4 wherein,
- the Brønsted acidic groups of the functionalised polyolefin are selected from the group consisting of -OH, -SH, -COOH, -SO₃H, -PO₃H₂, -OPO₃H₂, preferably -OH or -CO₂H, and
- the Bronsted basic groups of the functionalised polyolefin are selected from the group consisting of -NH₂, -NHR, -NR₂, where R is a hydrocarbyl group with 1 to 16 carbon atoms.

6. The polymer composition of any one or more of claims 1 - 5 wherein
- the cross-linking compound having Brønsted basic groups is selected from the group consisting of amine, diamine, triamine, polyamine, metal oxides (MOₓ), metal hydroxides (MOHₓ), metal alkoxides (MOR¹ₓ), metal carbonates (M(CO₃)ₓ), metal amides (M(NR²₂)ₓ), metal hydrides or metal alkyls (MR³ₓ) wherein
x = 1, 2 or 3,
M = Li, Na, K, Mg, Ca, Zn, Al,
R¹ = C1-C10 alkyl,
R², R³ = H, C1-C10 alkyl,
and wherein preferably the Brønsted basic group is selected from diamine, triamine, polyamine, metal hydroxide, metal alkoxide (MOR¹ₓ) or metal carbonate (M(CO₃)ₓ), where M preferably is Na, K, Ca, Al,
- the cross-linking compound having Brønsted acidic groups is selected from the group consisting of mono-, di-, tri and polycarboxylic acids, preferably di-, tri or polycarboxylic acid.

7. The polymer composition of any one or more of claims 1 - 6 wherein the composition further comprises non-functionalised polyolefin.

8. The polymer composition of any one or more of claims 1 - 7 wherein the composition further comprises functionalised polyolefins having functional groups other than, or in addition to, functional groups at the α, or α and ω positions.

9. The polymer composition of any one or more of claims 1 - 8 wherein the combined amount of functionalised polyolefin and cross-linking compound is at least 50 wt.%, preferably at least 75 wt.%, more preferably at least 90 wt.%, more preferably at least 95 wt.% based on the weight of the polymer composition.

10. The polymer composition of any one or more of claims 1 - 8 wherein the combined amount of functionalised polyolefin and cross-linking compound is at most 50 wt.%, preferably at most 25 wt.%, more preferably at most 10 wt.%, more preferably at most 5 wt.%, or at most 2 wt.% based on the weight of the polymer composition.

11. Article comprising or consisting of the polymer composition of any one or more of claims 1 - 10.
